# FASCICULE DE BREVET EUROPEEN

(11) **EP 1 508 722 B1**
(45) Date de publication et mention de la délivrance du brevet: **07.06.2006**
(21) Numéro de dépôt: 03292075.3
(22) Date de dépôt: 22.08.2003
(51) Int. Cl.: F16F 9/05, F16F 9/54, B60G 15/06, B60G 11/30

(54) **Attache à ressort pneumatique, notamment pour suspension de véhicule automobile, et véhicule automobile équipe d'une telle attache**
Befestigung mit Luftfeder, insbesondere für eine Radaufhängung eines Kraftfahrzeugs, und Kraftfahrzeug mit einer solchen Befestigung
Fastener with pneumatic spring, especially for a motor vehicle suspension, and a motor vehicle comprising the same

(43) Date de publication de la demande: 23.02.2005
(73) Titulaire: Delphi Technologies, Inc., Troy, MI 48007 (US)
(72) Inventeur: Marchand, Jocelyn, 92300 Levallois Perret (FR)
(74) Mandataire: Laget, Jean-Loup

(56) Documents cités:
- EP-A- 0 474 171
- WO-A-02/070918
- DE-A- 3 610 144
- DE-A- 4 327 585
- US-A- 4 768 758

## Description

La présente invention concerne une attache à ressort pneumatique, notamment un ressort à air utilisé dans les suspensions de véhicules automobiles.

On connaît par la demande de brevet français n° 2 820 180 appartenant à la demanderesse, un ressort pneumatique comprenant :
- un amortisseur ayant une tige de piston montée à coulissement dans un cylindre,
- un manchon en caoutchouc emmanché sur la tige de piston, au voisinage de son extrémité libre,
- une plaque de compression et une plaque de détente montées de part et d'autre dudit manchon, sur la tige de piston, lesdites plaques étant montées dans cet ordre dans la direction axiale de la tige du piston à partir du cylindre d'amortisseur,
- une pièce en forme de bol inversé, destinée à supporter le manchon en caoutchouc et à être attachée à la caisse du véhicule automobile par une pluralité de vis, le centre dudit bol étant ouvert et solidarisé à la paroi périphérique dudit manchon en caoutchouc, de façon que chaque plaque soit apte à venir alternativement buter contre ledit bol lors des débattements axiaux des plaques par rapport au bol,
- une membrane souple reliée, d'une part, au bol et, d'autre part, au cylindre d'amortisseur, ladite membrane définissant avec le manchon en caoutchouc, le bol et l'amortisseur, une première chambre formant ressort pneumatique, dont le volume est variable lors des débattements du cylindre par rapport au bol.

Au repos, les éléments constitutifs de l'attache sont généralement dimensionnés de façon que les plaques de détente et de compression soient espacées de la pièce en forme de bol, par une portion du manchon en caoutchouc, dans la direction axiale.

Dans des conditions de fonctionnement normal de l'attache, par exemple dans des conditions de roulement standard sur une route à revêtement sensiblement homogène, le manchon en caoutchouc ne subira que peu de déformations, ces déformations étant généralement insuffisantes pour provoquer une mise en butée des plaques contre le bol. Lors de son fonctionnement dans ces conditions dites normales, les débattements de la tige de piston dans le cylindre d'amortisseur engendreront une compression ou une détente de l'air dans la chambre qui fonctionnera comme un ressort pneumatique.

Dans des conditions de fonctionnement extrêmes, par exemple lorsque le véhicule roule sur une route en mauvais état, les roues du véhicule reliées à l'amortisseur pourront subir des débattements verticaux plus importants par rapport à la caisse du véhicule, de sorte que le manchon élastique sera déformé jusqu'à ce que la plaque inférieure de compression vienne buter contre le bol, lorsque la roue remonte vers la caisse, ou bien jusqu'à ce que la plaque supérieure de détente vienne buter contre le bol lorsque la roue redescendra, par exemple au niveau d'un nid de poule ; étant donné que le ressort pneumatique doit convenir à la fois pour des conditions de fonctionnement standard et des conditions de fonctionnement plus extrêmes, sur des routes en bon état ou en mauvais état, nécessairement la raideur du ressort pneumatique doit être sélectionnée selon un compromis qui n'est pleinement satisfaisant ni dans un mode ni dans un autre.

On connaît déjà un système permettant de régler la raideur du ressort, en fonction des conditions de roulement du véhicule, dans lequel le système comporte une chambre additionnelle qui communique avec la première chambre de l'attache, le volume total des deux chambres constituant le volume d'air du ressort pneumatique dans les conditions de fonctionnement normal. Ce système comporte un système de valve commandée électroniquement pour ouvrir ou fermer la communication entre la chambre additionnelle et la première chambre de l'attache. A cet effet, le système comporte des capteurs pour détecter les conditions de roulement du véhicule, le capteur étant apte à émettre un signal représentatif de telles conditions de roulement, ce signal étant interprété par une unité de commande électronique qui commande la valve précitée. Ainsi, lorsque les conditions de roulement sont plus difficiles, le volume d'air du ressort pneumatique est réduit à la première chambre, ce qui augmente automatiquement la raideur du ressort pneumatique. Ainsi, un tel système permet de disposer d'un ressort pneumatique à raideur variable, et plus précisément un système pneumatique dual, à savoir un ressort pneumatique rigide à raideur élevée dans des conditions de roulement extrêmes et un ressort pneumatique doux à raideur faible dans des conditions de roulement standard.

Toutefois, un tel système présente de nombreux inconvénients, notamment un coût élevé lié à l'utilisation des capteurs et de l'électronique de traitement de l'information, un encombrement et un poids relativement élevés en raison de l'utilisation de nombreuses pièces supplémentaires, ainsi que des procédures d'initialisation relativement longues et complexes à mettre en oeuvre pour assurer un bon fonctionnement du système.

On connait par le document WO-02/070918-A, une attache du type décrit dand le préambule de la revendication 1

L'invention a donc pour but de proposer une attache à ressort pneumatique, notamment pour suspension de véhicule automobile, qui permette de faire varier la raideur du ressort en fonction des conditions de fonctionnement, tout en étant d'un encombrement et d'un coût plus réduits.

A cet effet, invention a pour objet une attache à ressort pneumatique, telle que définie dans la revendication 1.

L'attache selon l'invention permet ainsi d'intégrer dans l'attache un système purement mécanique de variation de la raideur du ressort pneumatique, en réduisant l'encombrement supplémentaire à une chambre additionnelle prévue au-dessus de l'attache.

Dans une forme de réalisation particulière, le corps précité est emmanché à travers une paroi interne de la pièce de support, ladite paroi interne présentant une convexité tournée vers l'intérieur dudit corps élastiquement déformable, ce dernier comportant des extensions à ses extrémités axiales qui s'étendent au-delà de ladite paroi interne de la pièce de support, de façon que lesdites plaques soient espacées, au repos, de la pièce de support par lesdites extensions, chaque passage précité débouchant au niveau desdites extensions entre les plaques et la pièce de support. Dans ce cas, chaque passage a de préférence une forme incurvée épousant sensiblement la courbure de la paroi interne convexe de la pièce de support. A titre d'exemple, le nombre de passages peut être égal à trois.

Selon une autre caractéristique de l'invention, la pièce de support peut être en forme générale de bol inversé, dont le fond est ouvert en son centre et se prolonge intérieurement par ladite paroi interne convexe. Dans ce cas, la pièce formant boîtier peut être en forme de cloche inversée partiellement emboîtée sur la paroi latérale externe de ladite pièce en forme de bol inversé, pour définir entre elles la seconde chambre du ressort pneumatique.

Selon une autre caractéristique particulière de l'invention, la pièce de support comporte une collerette annulaire à section sensiblement en forme de L, dont la petite branche est solidaire de la paroi latérale externe de ladite pièce en forme de bol et dont la grande branche s'étend sensiblement radialement à distance de ladite pièce en forme de bol, ladite pièce en forme de cloche comportant un rebord annulaire qui vient en appui contre la grande branche précitée de ladite collerette annulaire, des moyens de fixation de l'attache étant prévus pour traverser ladite collerette et ledit rebord annulaire. Un joint d'étanchéité peut être logé entre la paroi latérale externe de la pièce en forme de bol, la collerette annulaire et ladite cloche.

Dans une variante, la pièce formant boîtier comporte sur son fond un orifice destiné à être relié à un connecteur pneumatique, pour sa liaison par exemple avec une source d'air comprimé, pour régler la pression de l'air dans les chambres du ressort pneumatique, permettant ainsi d'adapter le ressort à des charges différentes.

L'invention vise également un véhicule automobile, dont la suspension est équipée d'une attache telle que définie précédemment.

D'autres caractéristiques, détails, buts et avantages de l'invention vont maintenant être décrits en liaison avec un mode particulier de réalisation de l'invention, qui est donné uniquement à titre d'exemple illustratif et non limitatif, en référence aux dessins schématiques annexés, sur lesquels :
- la figure 1 est une vue schématique en coupe axiale d'une attache selon l'invention, pour une suspension de véhicule automobile au repos ;
- la figure 2 est une vue partielle de la figure 1, représentant l'attache dans un mode de détente extrême ; et
- la figure 3 est une vue analogue à la figure 2, mais représentant l'attache selon un mode de compression extrême.

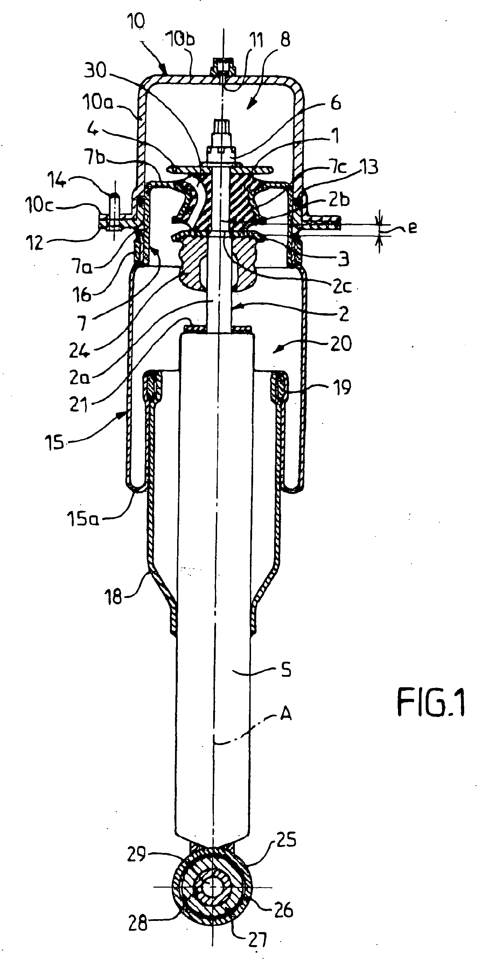

L'attache représentée sur la figure 1 comporte un manchon en caoutchouc 1 qui est monté sur une tige de piston d'amortisseur 2 entre une première plaque inférieure dite plaque de compression 3 et une deuxième plaque supérieure dite plaque de détente 4.

La tige de piston 2 comporte une première partie de section élargie 2a et une deuxième partie de section plus petite 2b, qui sont reliées par une portée tronconique 2c tournée vers l'extrémité libre de la tige de piston. La portion de section élargie 2a coulisse dans un cylindre d'amortisseur 5, alors que la portion de section plus petite 2b présente à son extrémité libre supérieure un filetage (non représenté) destiné à recevoir un écrou 6. La plaque inférieure de compression 3 est en appui contre la portée tronconique 2c de la tige de piston 2, alors que l'écrou 6 vient serrer, de manière connue en soi, la plaque supérieure de détente 4, avec le manchon en caoutchouc 1 intercalé entre les deux plaques.

L'attache comporte une pièce en forme de bol inversé 7, dont l'axe est sensiblement confondu avec l'axe A de l'amortisseur, la pièce en forme de bol 7 présentant une paroi latérale externe 7a, qui se prolonge par une paroi de fond 7b ouverte en son centre et dont la paroi latérale interne 7c a une section sensiblement en forme de C dont la convexité est tournée vers l'axe A de l'amortisseur. Le manchon 1 en caoutchouc est emmanché à travers la paroi latérale interne convexe 7c de la pièce en forme de bol 7, cette paroi latérale interne 7c venant radialement comprimer le manchon en caoutchouc 1, pour contribuer à son maintien par rapport à cette pièce.

Comme visible au repos sur la figure 1, la plaque inférieure de compression 3 est espacée d'un jeu "e" de l'extrémité libre inférieure de la paroi 7c et de manière analogue la paroi de fond 7b est espacée d'un jeu de préférence identique ou similaire à la plaque supérieure de détente 4.

L'attache comporte une pièce 10 en forme de cloche inversée dont la paroi latérale 10a est emboîtée partiellement sur la paroi latérale externe 7a du bol 7, pour définir entre eux une chambre 8, dans laquelle sont logés la plaque supérieure 4, l'écrou 6 et l'extrémité supérieure de la tige de piston 2. Le fond 10b de la cloche 10 est percé d'un orifice 11 pour sa connexion à un connecteur pneumatique (non représenté), relié par exemple à un tuyau d'arrivée d'air lui-même relié à une source d'air comprimé pour augmenter ou réduire la pression d'air dans le ressort pneumatique. Un tel système peut, bien entendu, être commandé automatiquement ou sélectivement par le conducteur, de manière connue en soi.

Une collerette annulaire 12 à section sensiblement en forme de L est soudée par sa petite branche à la paroi latérale externe 7a de la pièce en forme de bol 7, la grande branche du L s'étendant sensiblement radialement de façon qu'un rebord périphérique annulaire 10c de la cloche 10 vienne en appui contre cette collerette annulaire 12. Un joint d'étanchéité annulaire 13 est intercalé entre la paroi latérale 10a de la cloche, la paroi latérale externe 7a du bol, et la collerette annulaire 12. A cet effet, la paroi 10a présente un léger épaulement pour y loger le joint 13 et la petite branche du L de la collerette 12.

Des moyens de fixation, par exemple trois vis régulièrement réparties sur la périphérie, sont prévus sur la collerette 12 et le rebord annulaire 10c de la cloche 10, par exemple pour la fixation de l'attache à la caisse d'un véhicule automobile.

Une membrane souple 15, par exemple en fibres enrobées de caoutchouc, est fixée à la paroi latérale externe 7a du bol 7, par l'intermédiaire d'un anneau métallique de sertissage 16 de manière connue en soi. Cette membrane souple présente une forme sensiblement tubulaire, dont la portion inférieure est repliée vers l'intérieur, pour former une boucle 15a dirigée vers le bas. En section, la membrane 15 a une forme générale d'épingle ou de U, dont la branche interne est plus courte que la branche externe. L'extrémité interne de cette membrane 15 est fixée à l'extrémité supérieure d'un élément de liaison rigide 18, par l'intermédiaire d'un anneau de sertissage 19. Cet élément rigide 18 est de forme globalement tubulaire se terminant à son extrémité inférieure par une portion tronconique qui est soudée au cylindre d'amortisseur 5. L'élément 18 avec le cylindre 5 constituent le piston du ressort pneumatique.

La chambre principale 20 du ressort pneumatique est définie entre la membrane souple 15, l'élément rigide 18, le cylindre d'amortisseur 5, le piston d'amortisseur 2, le manchon en caoutchouc 1 et le bol 7.

On voit également sur la figure 1 une rondelle métallique 21 emmanchée sur l'extrémité supérieure du cylindre d'amortisseur 5 et solidaire de celui-ci pour servir de butée à un autre manchon en caoutchouc 24, appelé également "butée de choc" qui est fixée sous la première plaque de compression 3. Ce manchon 24 peut également être en polyuréthanne.

De manière connue en soi, l'extrémité inférieure du cylindre d'amortisseur 5 est fixée sur un élément de liaison au sol du véhicule, c'est à dire un élément de liaison avec la roue du véhicule. Sur la figure 1, en partant de l'extérieur vers l'intérieur, on voit un oeil métallique 25 fixé au cylindre d'amortisseur 5, un insert métallique ou plastique 26, un manchon en caoutchouc 27, une douille métallique 28, et un passage central 29 pour une vis de fixation de l'amortisseur, par exemple sur un porte-fusée, un triangle ou un bras de suspension.

Enfin, au moins un passage 30 est prévu à travers le manchon en caoutchouc 1, de façon que les extrémités débouchantes 30a et 30b de ce passage soient situées de part et d'autre, dans la direction axiale, de la paroi interne 7c du bol 7. Pour que le passage débouche au niveau de l'espace intercalaire e, la hauteur du manchon en caoutchouc 1 est supérieure à celle de la paroi latérale interne 7c. Ainsi, le passage 30 peut déboucher sur des extensions axiales du manchon 1, ces extensions axiales ayant une forme sensiblement tronconique, au repos, sur la figure 1.

On va maintenant décrire brièvement le fonctionnement de l'attache selon l'invention.

Lors du fonctionnement normal, sur une route à revêtement sensiblement lisse, le débattement des roues par rapport à la caisse est relativement doux et lent, ce qui entraîne un déplacement du cylindre 5 par rapport au bol 7, à l'encontre du ressort pneumatique dont le volume d'air est constitué par les chambres 8 et 20 qui communiquent à travers le ou les passages 30. La raideur du ressort pneumatique étant inversement proportionnelle au volume d'air à comprimer, on comprend que dans ce mode de fonctionnement "normal", la raideur du ressort pneumatique est relativement plus petite que dans le cas d'un volume d'air constitué uniquement par la chambre 20, ce qui rend la suspension plus souple. Dans un tel mode de fonctionnement, les débattements de la roue par rapport à la caisse ne sont pas suffisamment violents et importants pour entraîner le déplacement du piston jusqu'à ce que les plaques 3 ou 4 viennent buter contre le bol 7.

En revanche, lorsque les conditions de roulement sont irrégulières, par exemple sur une route de mauvaise qualité, les débattements des roues par rapport à la caisse peuvent être plus importants et plus rapides, ce qui peut entraîner la mise en butée contre le bol 7.

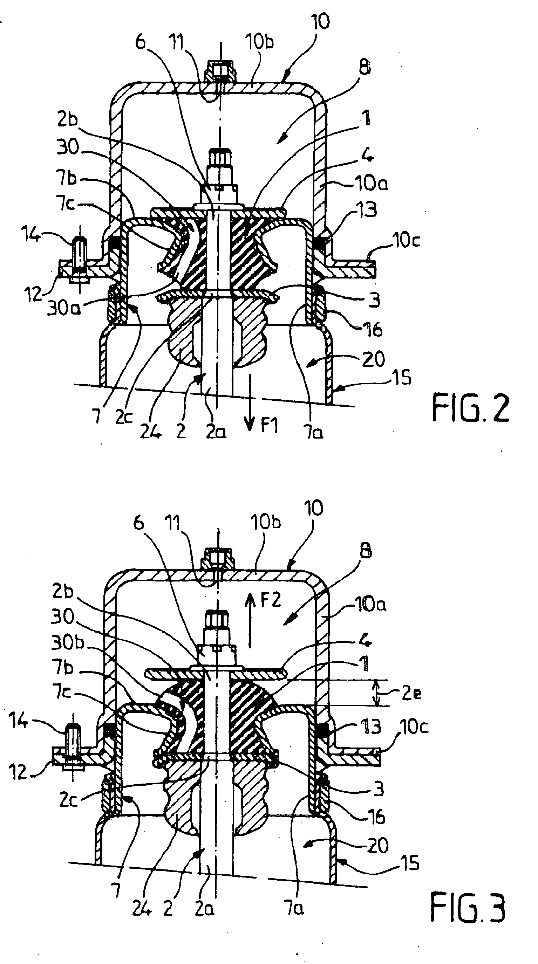

Par exemple, lorsqu'une roue passe au-dessus d'un trou, le piston 2 est brusquement entraîné vers le bas dans la direction de la flèche F1 sur la figure 2, ce qui entraîne la mise en butée de la plaque de détente 4 contre le fond 7b du bol 7, obturant de ce fait l'extrémité supérieure 30b de chaque passage 30 dans le manchon 1. Ainsi, toute communication entre les chambres 8 et 20 est fermée et le volume d'air du ressort pneumatique est désormais limité à la chambre 20, ce qui augmente d'autant la raideur du ressort pneumatique, et permet ainsi de rigidifier la suspension, qui autrement pourrait subir des débattements trop importants et trop rapidement. Ainsi, seul le volume d'air compris dans la chambre 20 subira une détente lors de la descente du cylindre 5 par rapport à la caisse du véhicule.

A l'inverse, lors d'un rebond de la roue qui provoque une montée du piston 2 vers le haut selon la flèche F2 sur la figure 3, c'est la plaque de compression 3 qui vient buter contre le bord inférieur de la paroi interne 7c du bol 7 obturant l'extrémité inférieure 30a de chaque passage 30, ce qui conduit de la même manière à limiter le volume d'air du ressort pneumatique à la chambre 20. Ainsi, seul l'air compris dans la chambre 20 sera comprimé lors de la remontée du cylindre 5 par rapport au châssis du véhicule.

Sur les figures 2 et 3, le manchon 1 et le ou les passages 30 sont configurés de façon que les plaques 3 et 4 puissent venir en appui direct contre le bol 7, pour obturer la communication, mais on pourrait prévoir en variante une mise en butée indirecte entre les plaques et le bol, avec interposition de matière du manchon 1, de façon que la déformation du manchon lors de cette mise en butée obture le ou les passages 30.

Bien entendu, la membrane souple 15 et sa boucle 15a permettent au cylindre 5 de se déplacer dans un mouvement de va-et-vient à l'intérieur de la chambre étanche 20. La boucle 15a de la membrane 15 effectue un mouvement de roulement le long de la paroi extérieure de l'élément rigide 18, lors du déplacement axial du cylindre 5 d'amortisseur par rapport à son piston 2. Ainsi, l'air ou un autre fluide compressible confiné dans la chambre 20 est comprimé et dilaté lors du mouvement en va-et-vient du cylindre 5, de manière connue en soi.

Bien entendu, l'invention n'est pas limitée à l'exemple illustré et décrit mais peut être appliquée à des ressorts pneumatiques de tout genre dans d'autres domaines d'application que celui d'un ressort pneumatique utilisé dans la suspension d'un véhicule automobile, sans pour autant sortir du cadre de l'invention.

## Revendications

1. Attache à ressort pneumatique, notamment pour suspension de véhicule automobile comprenant :
- un corps élastiquement déformable (1), de préférence en matériau élastomère tel que le caoutchouc,
- deux plaques (3,4) montées de part et d'autre dudit corps, dans une direction dite axiale (A),
- une pièce de support (7), destinée par exemple à être attachée à la caisse d'un véhicule automobile, dont une portion s'étend sensiblement radialement entre les deux plaques précitées et est solidarisée de la périphérie dudit corps, de façon que chaque plaque soit apte à venir alternativement buter contre ladite pièce de support, lors des débattements axiaux desdites plaques par rapport à ladite pièce de support,
- une membrane souple (15) reliée, d'une part, à la pièce de support et, d'autre part, à une pièce de liaison (18), ladite pièce de liaison étant destinée par exemple à être attachée aux éléments (25-29) d'une roue de véhicule automobile, ladite membrane définissant avec ledit corps et lesdites pièces de liaison et de support une première chambre (20) formant ressort pneumatique, le volume de la première chambre (20) pouvant varier lors des débattements de la pièce de liaison par rapport à la pièce de support,
- un amortisseur dont le cylindre d'amortisseur (5) est lié à ladite pièce de liaison (18) et dont la tige de piston (2) s'étend axialement à travers lesdites plaques (3, 4) et ledit corps précité (1) en forme de manchon,
- une pièce formant boîtier (10) montée sur la pièce de support (7) du côté opposé à la première chambre (20) et délimitant avec le corps précité (1) une seconde chambre (8), cette dernière communiquant, au repos, avec la première chambre par l'intermédiaire d'au moins un passage (30) traversant le corps et débouchant de part et d'autre de la pièce de support dans chacune des deux chambres (8,20),
**caractérisé par le fait que** lesdites plaques (3, 4) sont aptes à venir obturer les extrémités débouchantes (30a, 30b) de chaque passage du corps lorsqu'elles viennent en butée contre la pièce de support.

2. Attache selon la revendication 1, **caractérisée par le fait que** le corps précité (1) est emmanché à travers une paroi interne (7c) de la pièce de support (7), ladite paroi interne présentant une convexité tournée vers l'intérieur dudit corps élastiquement déformable, ce dernier comportant des extensions à ses extrémités axiales qui s'étendent au-delà de ladite paroi interne de la pièce de support, de façon que lesdites plaques (3, 4) soient espacées, au repos, de la pièce de support par lesdites extensions, chaque passage (30) précité débouchant au niveau desdites extensions entre les plaques et la pièce de support.

3. Attache selon la revendication 2, **caractérisée par le fait que** chaque passage (30) a une forme incurvée épousant sensiblement la courbure de la paroi interne convexe (7c) de la pièce de support (7).

4. Attache selon la revendication 2 ou 3, **caractérisée par le fait que** la pièce de support (7) est en forme générale de bol inversé, dont le fond (7b) est ouvert en son centre et se prolonge intérieurement par ladite paroi interne convexe (7c).

5. Attache selon la revendication 4, **caractérisée par le fait que** la pièce formant boîtier (10) est en forme de cloche inversée partiellement emboîtée sur la paroi latérale externe (7a) de ladite pièce en forme de bol inversé (7), pour définir entre elles la seconde chambre (8) du ressort pneumatique.

6. Attache selon la revendication 5, **caractérisée par le fait que** la pièce de support (7) comporte une collerette annulaire (12) à section sensiblement en forme de L, dont la petite branche est solidaire de la paroi latérale externe (7a) de ladite pièce en forme de bol et dont la grande branche s'étend sensiblement radialement à distance de ladite pièce en forme de bol, ladite pièce en forme de cloche (10) comportant un rebord (10c) annulaire qui vient en appui contre la grande branche précitée de ladite collerette annulaire (12), des moyens de fixation (14) de l'attache étant prévus pour traverser ladite collerette et ledit rebord annulaire.

7. Attache selon l'une des revendications 1 à 6, **caractérisée par le fait que** la pièce formant boîtier (10) comporte sur son fond (10b) un orifice (11) destiné à être relié à un connecteur pneumatique, pour sa liaison par exemple avec une source d'air comprimé.

8. Véhicule automobile dont la suspension est équipée d'une attache selon l'une des revendications 1 à 7.

## Claims

1. Attachment of the pneumatic spring type, in particular for a motor vehicle suspension, comprising:
- an elastically deformable body (1), preferably made of an elastomeric material such as rubber,
- two plates (3 , 4) mounted one on each side of the said body, in a direction referred to as the axial direction (A),
- a supporting part (7) intended for example to be attached to the body of a motor vehicle, a portion of which extends substantially radially between the two plates mentioned above and is secured to the periphery of the said body, in such a way that each plate is able to butt alternately is against the said supporting part during axial displacements of the said plates with respect to the said supporting part,
- a flexible membrane (15) connected, on the one hand, to the supporting part and, on the other hand, to a connecting part (18), the said connecting part being intended for example to be attached to the elements (25-29) of a motor vehicle wheel, the said membrane defining, together with the said body and the said connecting and supporting parts, a first chamber (20) forming a pneumatic spring, the volume of the first chamber (20) being able to vary during the displacements of the connecting part with respect to the supporting part,
- a damper whose damper cylinder (5) is joined to the said connecting part (18) and whose piston rod (2) extends axially through the said plates (3, 4) and through the said aforementioned sleeve-shaped body (1),
- a part forming a housing (10) mounted on the supporting part (7) on the side opposed to the first chamber (20) and delimiting with the aforementioned body (1) a second chamber (8), the latter communicating, at rest, with the first chamber via at least one passage (30) passing through the body and emerging on each side of the supporting part into each of the two chambers (8, 20),
**characterized in that** the said plates (3, 4) are able to close off the emerging ends (30a, 30b) of each passage of the body when they butt against the supporting part.

2. Attachment according to Claim 1, **characterized in that** the aforementioned body (1) is fitted through an internal wall (7c) of the supporting part (7), the said internal wall having a convexity facing the interior of the said elastically deformable body, this body having extensions at its axial ends which extend beyond the said internal wall of the supporting part in such a way that, at rest, the said plates (3 , 4) are spaced apart from the supporting part by way of the said extensions, each aforementioned passage (30) emerging at the said extensions between the plates and the supporting part.

3. Attachment according to Claim 2, **characterized in that** each passage (30) has a curved shape corresponding substantially to the curvature of the convex internal wall (7c) of the supporting part (7).

4. Attachment according to Claim 2 or 3, **characterized in that** the supporting part (7) has the general shape of an inverted bowl, the crown (7b) of which is open in its centre and is prolonged internally by the said convex internal wall (7c).

5. Attachment according to Claim 4, **characterized in that** the part forming a housing (10) has the shape of an inverted bell partially fitted over the external lateral wall (7a) of the said part (7) in the shape of an inverted bowl, so as to define between them the second chamber (8) of the pneumatic spring.

6. Attachment according to Claim 5, **characterized in that** the supporting part (7) has an annular collar (12) of substantially L-shaped cross section, the small branch of which is secured to the external lateral wall (7a) of the said bowl-shaped part and the large branch of which extends substantially radially away from the said bowl-shaped part, the said bell-shaped part (10) having an annular rim (10c) which bears against the aforementioned large branch of the said annular collar (12), means (14) for fastening the attachment being designed to pass through the said collar and through the said annular rim.

7. Attachment according to one of Claims 1 to 6, **characterized in that** the part forming a housing (10) has in its crown (10b) an orifice (11) intended to be connected to a pneumatic connector, so that it can be connected for example to a source of compressed air.

8. Motor vehicle whose suspension is equipped with an attachment according to one of Claims 1 to 7.

## Patentansprüche

1. Befestigung mit Luftfeder, insbesondere für eine Radaufhängung eines Kraftfahrzeugs, mit:
- einem elastisch verformbaren Körper (1), vorzugsweise aus einem Elastomermaterial, wie beispielsweise Kautschuk,
- zwei auf beiden Seiten des Körpers in einer axialen Richtung (A) montierten Platten (3, 4),
- einem Trägerbauteil (7), welches beispielsweise an einem Kraftfahrzeugkasten befestigbar ist, von dem sich ein Abschnitt im Wesentlichen radial zwischen den beiden Platten erstreckt und am Umfang des Körpers so befestigt ist, dass auf dem axialen Federweg der Platten bezüglich des Trägerbauteils jede Platte abwechselnd gegen das Trägerbauteil in Anschlag kommen kann,
- einer nachgiebige Membran (15), die einerseits mit dem Trägerbauteil und andererseits mit einem Verbindungsteil (18) verbunden ist, wobei das Verbindungsteil beispielsweise an Bauteilen (25-29) eines Rads des Kraftfahrzeugs befestigt werden kann, wobei die Membran mit dem Körper und dem Verbindungsteil, sowie dem Trägerbauteil eine, eine pneumatische Feder bildende erste Kammer (20) definieren, wobei das Volumen der ersten Kammer (20) auf dem Federweg des Verbindungsteils bezüglich des Trägerbauteils variieren kann,
- einem Dämpfer, dessen Dämpfungszylinder (5) mit dem Verbindungsteil (18) verbunden ist und dessen Kolbenschaft (2) axial durch die Platten (3, 4) und den hülsenförmigen Körper (1) verläuft,
- einem ein Gehäuse bildenden Teil (10), welches auf dem Trägerbauteil (7) auf der, der ersten Kammer (20) gegenüber liegenden Seite montiert ist und mit dem Körper (1) eine zweite Kammer (8) bildet, wobei letztere im Ruhezustand mit der ersten Kammer über wenigstens einen Durchlass (30) kommuniziert, welcher den Körper durchquert und auf beiden Seiten des Trägerbauteils in jede der beiden Kammern (8, 20) mündet,
**dadurch gekennzeichnet, dass** die beiden Platten (3, 4) so ausgelegt sind, dass sie die Mündungsenden (30a, 30b) jedes Durchlasses des Körpers verschließen, wenn sie gegen das Trägerbauteil in Anschlag kommen.

2. Befestigung gemäß Anspruch 1, **dadurch gekennzeichnet, dass** der Körper (1) durch eine Innenwand (7c) des Trägerbauteils (7) eingezogen ist, wobei die Innenwand eine ins Innere des elastisch verformbaren Körpers gerichtete Wölbung aufweist, wobei der Körper an seinen axialen Enden Verlängerungen aufweist, die sich über die Innenwand des Trägerbauteils derart hinaus erstrecken, das die Platten (3, 4) im Ruhezustand mittels der Verlängerungen von dem Trägerbauteil beabstandet sind, wobei jeder Durchlass (30) auf Höhe der Verlängerungen zwischen den Platten und dem Trägerbauteil mündet.

3. Befestigung gemäß Anspruch 2, **dadurch gekennzeichnet, dass** jeder Durchlass (30) eine gekrümmte Form aufweist, die im Wesentlichen an die Krümmung der gewölbten Innenwand (7c) des Trägerbauteils (7) angepasst ist.

4. Befestigung gemäß einem der Ansprüche 2 oder 3, **dadurch gekennzeichnet, dass** das Trägerbauteil (7) die Allgemeinform einer umgedrehten Schale aufweist, deren Boden (7b) offen und nach innen durch die gewölbte Innenwand (7c) verlängert ist.

5. Befestigung gemäß Anspruch 4, **dadurch gekennzeichnet, dass** das ein Gehäuse bildende Bauteil (10) die Form einer umgedrehten Glocke aufweist, die teilweise in die seitliche Außenwand (7a) des Bauteils in Form einer umgedrehten Schale (7) eingefügt ist, um so zwischen ihnen die zweite Kammer (8) der pneumatischen Feder zu definieren.

6. Befestigung gemäß Anspruch 5, **dadurch gekennzeichnet, dass** das Trägerbauteil (7) einen ringförmigen Kragen (12) mit im Wesentlichen L-förmigem Querschnitt aufweist, dessen kurzer Arm mit der seitlichen Außenwand (7a) des schalenförmigen Bauteils verbunden ist und dessen langer Arm im Wesentlichen radial im Abstand von dem schalenförmigen Teil verläuft, wobei das glockenförmige Teil (7) einen ringförmigen Rand (10c) aufweist, der gegen den langen Arm des ringförmigen Kragens (12) in Anlage kommt, wobei Mitte (14) zur Fixierung (14) der Befestigung vorgesehen sind, welche den Kragen und den ringförmigen Rand durchqueren.

7. Befestigung gemäß einem der Ansprüche 1 bis 6, **dadurch gekennzeichnet, dass** das ein Gehäuse bildende Bauteil (10) in seinem Boden (10b) eine Öffnung (11) aufweist, welche mit einem pneumatischen Anschluss verbindbar ist, um es beispielsweise mit einer Druckluftquelle zu verbinden.

8. Kraftfahrzeug, dessen Aufhängung mit einer Befestigung gemäß einem der Ansprüche 1 bis 7 versehen ist.
